# EUROPEAN PATENT APPLICATION

(11) **EP 4 769 529 A1**
(43) Date of publication of application: **01.07.2026**
(21) Application number: 25212597.6
(22) Date of filing: 31.10.2025
(51) Int. Cl.: H01M 4/134, H01M 4/38, H01M 4/62, H01M 10/0525, H01M 10/0562

(54) **ELECTRODE MIXTURE AND BATTERY**

(30) Priority: 26.12.2024 JP 2024230610
(71) Applicant: TOYOTA JIDOSHA KABUSHIKI KAISHA, Toyota-shi, Aichi-ken 471-8571 (JP)
(72) Inventor: Furuya, Ryosuke, Toyota-shi, Aichi-ken,, 471-8571 (JP)
(74) Representative: Winter, Brandl - Partnerschaft mbB

(57) **Abstract**

The present disclosure provides an electrode mixture that, after having been used to form an electrode active material layer, can inhibit excessive collapse of the electrode active material in the thickness direction when pressed, and/or that can improve homogeneity of the constituent components in the thickness direction and the in-plane direction, as well as a battery comprising the electrode mixture. The electrode mixture of the disclosure comprises electrode active material particles and tetrapod-shaped particles. The battery of the disclosure has an electrode active material layer, the electrode active material layer comprising an electrode mixture of the disclosure.

## Description

### FIELD

The present disclosure relates to an electrode mixture and a battery.

### BACKGROUND

Various types of electrode materials for batteries have been developed in the prior art. For electrode active material layers comprising alloy-based active material particles that expand and contract during battery charge-discharge, techniques are being developed to reduce volume changes in the electrode active material layer caused by such expansion and contraction.

PTL 1, for example, discloses a negative electrode for a secondary battery having an active material layer, wherein the active material layer comprises a sulfide solid electrolyte and composite particles as the active material, the composite particles comprising a plurality of porous silicon particles and a binder, and the active material layer having a porosity exceeding 15%.

### [CITATION LIST]

### [PATENT LITERATURE]

[PTL 1] Japanese Unexamined Patent Publication No. 2024-017797

### SUMMARY

### [TECHNICAL PROBLEM]

An electrode active material layer for a solid-state battery is usually pressed for densification. It may be desirable that the electrode active material is not excessively collapsed even by such pressing. For a porous electrode active material such as disclosed in PTL 1, for example, it is particularly preferred for the porous electrode active material to not undergo excessive collapse in order to maintain its porous structure.

From the viewpoint of facilitating uniform electrode reaction inside the electrode active material layer, it is preferred for the constituent components of the electrode active material layer to have high homogeneity in the thickness direction and the in-plane direction.

It is an object of the present disclosure to provide an electrode mixture that, after having been used to form an electrode active material layer, can inhibit excessive collapse of the electrode active material in the thickness direction when pressed, and/or that can improve homogeneity of the constituent components in the thickness direction and the in-plane direction, as well as a battery comprising the electrode mixture.

### [SOLUTION TO PROBLEM]

The present inventors have found that the aforementioned object can be achieved by the following means.
<Aspect 1> An electrode mixture comprising:
   electrode active material particles, and
   tetrapod-shaped particles.
<Aspect 2> The electrode mixture according to aspect 1, wherein the ratio of the length of one side of the tetrapod-shaped particles with respect to the mean particle diameter of the electrode active material particles is 1 to 50.
<Aspect 3> The electrode mixture according to aspect 1, wherein the electrode active material particles form electrode active material composite particles.
<Aspect 4> The electrode mixture according to aspect 3, wherein the ratio of the length of one side of the tetrapod-shaped particles with respect to the mean particle diameter of the electrode active material composite particles is 0.1 to 10.
<Aspect 5> The electrode mixture according to any one of aspects 1 to 4, which further comprises filamentous particles.
<Aspect 6> The electrode mixture according to aspect 5, wherein the filamentous particles are vapor-grown carbon fibers.
<Aspect 7> The electrode mixture according to aspect 5 or 6, wherein the ratio of the length of one side of the tetrapod-shaped particles with respect to the fiber length of the filamentous particles is 0.5 to 20.
<Aspect 8> The electrode mixture according to any one of aspects 1 to 7, wherein the electrode active material particles are alloy-based electrode active material particles.
<Aspect 9> The electrode mixture according to aspect 8, wherein the alloy-based electrode active material particles are silicon particles.
<Aspect 10> The electrode mixture according to any one of aspects 1 to 9, wherein the tetrapod-shaped particles are zinc oxide particles.
<Aspect 11> The electrode mixture according to any one of aspects 1 to 10, wherein the ratio of the tetrapod-shaped particle content with respect to the electrode active material particle content is 1.0 vol% to 6.0 vol%.
<Aspect 12> The electrode mixture according to any one of aspects 1 to 11, which further comprises a solid electrolyte.
<Aspect 13> An electrode mixture according to aspect 12, wherein the solid electrolyte is a sulfide solid electrolyte.
<Aspect 14> A battery,
   having an electrode active material layer,
   wherein the electrode active material layer comprises an electrode mixture according to any one of aspects 1 to 13.
<Aspect 15> The battery according to aspect 14, which is a solid-state battery.

### [ADVANTAGEOUS EFFECTS OF INVENTION]

The present disclosure provides an electrode mixture that, after having been used to form an electrode active material layer, can inhibit excessive collapse of the electrode active material in the thickness direction when pressed, and/or that can improve homogeneity of the constituent components in the thickness direction and the in-plane direction, as well as a battery comprising the electrode mixture.

### BRIEF DESCRIPTION OF DRAWINGS

Fig. 1 is a simplified cross-sectional view showing an example of an electrode mixture of the disclosure as an electrode active material layer.
Fig. 2 is a simplified cross-sectional view showing an example of an electrode mixture of the disclosure as an electrode active material layer.

### DESCRIPTION OF EMBODIMENTS

An embodiment of the disclosure will now be described in detail. The disclosure is not limited to the embodiment described below, however, and various modifications may be implemented which do not depart from the gist thereof.

### <Electrode mixture>

The electrode mixture of the disclosure comprises electrode active material particles and tetrapod-shaped particles.

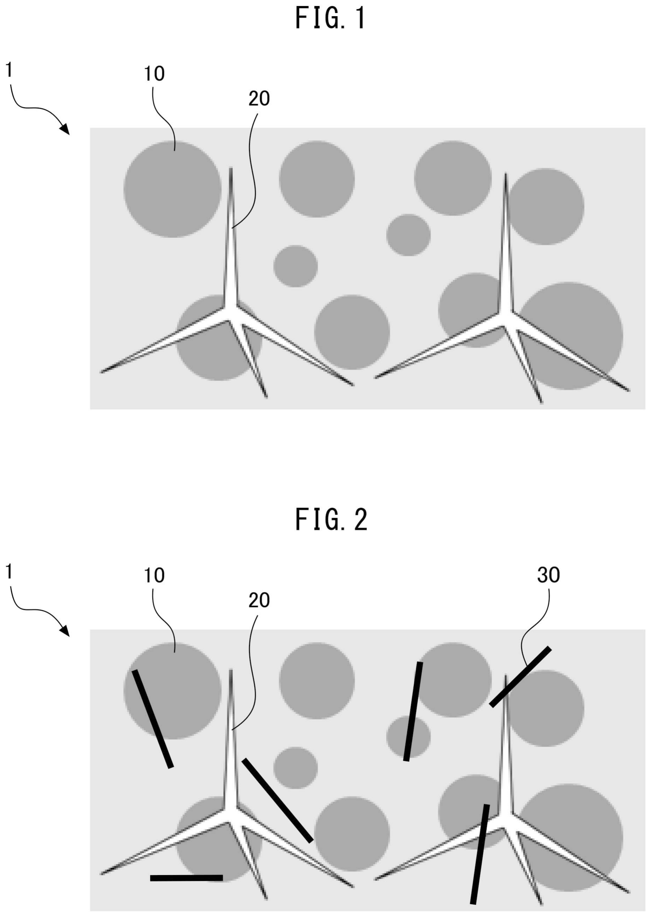

The present inventors have found, unexpectedly, that if the electrode mixture comprises electrode active material particles and tetrapod-shaped particles, it is possible to inhibit excessive collapse of the electrode active material in the thickness direction when it is pressed, after the electrode active material layer has been formed. Without intention to be constrained by any particular theory, it is believed that the tetrapod-shaped particles 20 function as pillars, thus helping to reduce excessive collapse of the electrode active material, as shown in Fig. 1.

The present inventors have also found, unexpectedly, that if the electrode mixture comprises electrode active material particles and tetrapod-shaped particles, it is possible to increase homogeneity of the constituent components in the thickness direction and the in-plane direction after the electrode active material layer has been formed. Without intention to be constrained by any particular theory, it is believed that the tetrapod-shaped particles 20 can inhibit orientation of the constituent components of the electrode mixture in the in-plane direction, as shown in Fig. 2.

Figs. 1 and 2 are simplified cross-sectional views showing an example of an electrode mixture 1 of the disclosure as an electrode active material layer. In Figs. 1 and 2, "10" represents electrode active material particles or electrode active material composite particles as described below, "20" represents tetrapod-shaped particles, and "30" represents filamentous particles.

For the purpose of the disclosure, "mixture" means a composition that can form an active material layer either by itself or by further comprising other components. Moreover, the term "mixture slurry" means a slurry that comprises a dispersing medium in addition to the "mixture", allowing it to form an active material layer by being coated and dried.

For the purpose of the disclosure, "electrode mixture" may be either a "positive electrode mixture" or a "negative electrode mixture", and especially a "negative electrode mixture".

The elements composing the electrode mixture of the disclosure will now be described.

### <Electrode active material particles>

The electrode mixture of the disclosure comprises electrode active material particles. The term "electrode active material" may be either a "positive electrode active material" or a "negative electrode active material", and especially a "negative electrode active material". For example, when the electrode active material particles are negative electrode active material particles, the electrode mixture of the disclosure is a negative electrode mixture.

In the electrode mixture of the disclosure, the electrode active material particles may be alloy-based electrode active material particles. The alloy-based active material particles are not particularly restricted, and they may undergo expansion and contraction during charge-discharge of the battery, for example.

Specifically, the alloy-based electrode active material may comprise a silicon (Si) alloy-based electrode active material or a tin (Sn) alloy-based electrode active material, without any limitation to these.

Examples of Si alloy-based electrode active materials include silicon, silicon oxides, silicon carbide, silicon nitrides, and their solid solutions. A Si alloy-based electrode active material may also contain elements other than silicon, such as Fe, Co, Sb, Bi, Pb, Ni, Cu, Zn, Ge, In, Sn and Ti, for example.

Examples of Sn alloy-based electrode active materials include tin, tin oxides, tin nitrides, and their solid solutions. A Sn alloy-based electrode active material may also include elements other than tin, such as Fe, Co, Sb, Bi, Pb, Ni, Cu, Zn, Ge, In, Ti and Si, for example.

The alloy-based electrode active material may also comprise silicon. In other words, the electrode active material particles may include silicon particles, and most particularly it consists of silicon particles.

The silicon particles may be either amorphous or crystalline. The crystal phase in the silicon particles is not particularly restricted.

The silicon particles may be porous silicon particles. Such a construction will allow expansion of the silicon alloy-based electrode active material to be absorbed even by the pores in the porous silicon particles. The tetrapod-shaped particles described below can also function as pillars for the pores inside the porous silicon particles. This can more effectively inhibit volume change of the electrode active material layer.

For the purpose of the disclosure, the porous silicon particles may be particles containing nanoporous silicon. Nanoporous silicon is silicon having numerous pores on the nanometer order, i.e. having pore sizes of smaller than 1000 nm and especially 100 nm or smaller, for example. The porous silicon particles may also include pores with diameters of 55 nm and smaller. Pores with diameters of 55 nm and smaller are resistant to collapse even with pressing. In other words, porous silicon particles including pores with diameters of 55 nm or smaller easily maintain a porous structure even after pressing. As an example, pores with diameters of 55 nm or smaller may be present at 0.21 cc or greater, 0.22 cc/g or greater or 0.23 cc/g or greater, and 0.30 cc/g or less, 0.28 cc/g or less or 0.26 cc/g or less, per 1 g of porous silicon particles. The amount of pores with diameters of 55 nm or smaller among the porous silicon particles can be determined from the pore size distribution determined by the nitrogen gas adsorption or DFT method, for example.

The proportion of pores in the porous silicon particles is not particularly restricted. The proportion may be 1% or higher, 5% or higher, 10% or higher or 20% or higher, and 80% or lower, 70% or lower, 60% or lower, 50% or lower, 40% or lower or 30% or lower, for example. The proportion of pores can be determined by observation with a scanning electron microscope (SEM), for example. The number of samples is preferably large, and may be 100 or more, for example. The proportion may be the average value determined from the samples.

The mean particle diameter of the electrode active material particles may be 0.01 µm or larger, 0.05 µm or larger, 0.1 µm or larger, 0.5 µm or larger or 1 µm or larger, and 10 µm or smaller, 5 µm or smaller, 3 µm or smaller, 2 µm or smaller or 1.5 µm or smaller. The mean particle diameter can be determined by observation with an electron microscope such as a scanning electron microscope (SEM), and for example, it can be determined as the average for the maximum Feret diameter of each of the particles. The number of samples is preferably large, and may be 20 or more, 50 or more or 100 or more, for example. The mean particle diameter can be appropriately adjusted by appropriately modifying the production conditions for the electrode active material particles, or by classifying treatment.

The electrode active material particles may comprise or not comprise an electrode active material other than the alloy-based electrode active material. The content of the alloy-based electrode active material in the electrode active material particles is not particularly restricted, and may be 50 mass% or greater, 60 mass% or greater, 70 mass% or greater, 80 mass% or greater, 90 mass% or greater, 95 mass% or greater, 99 mass% or greater or 100 mass%, for example. In other words, the electrode active material particles may consist entirely of only the alloy-based electrode active material as the electrode active material.

### (Electrode active material composite particles)

The electrode active material particles in the electrode mixture of the disclosure may form electrode active material composite particles.

The mean particle diameter of the electrode active material composite particles may be 1 µm or larger, 3 µm or larger, 5 µm or larger or 10 µm or larger, and 50 µm or smaller, 30 µm or smaller, 20 µm or smaller, 15 µm or smaller or 10 µm or smaller, for example. The mean particle diameter can be determined by observation with an electron microscope such as a scanning electron microscope (SEM), and for example, it can be determined as the average for the maximum Feret diameter of each of the particles. The number of samples is preferably large, and may be 20 or more, 50 or more or 100 or more, for example. The mean particle diameter can be appropriately adjusted by appropriately modifying the production conditions for the electrode active material composite particles, or by classifying treatment.

The electrode active material composite particles have voids. The voids allow expansion to be absorbed when the alloy-based electrode active material particles are silicon particles. The tetrapod-shaped particles described below can function as pillar against the voids. In other words, the tetrapod-shaped particles can help prevent collapse of the voids by pressing during densification of the electrode active material layer, for example.

The porosity of the electrode active material composite particles is not particularly restricted and may be appropriately set in consideration of the desired battery capacity and degree of expansion of the electrode active material particles.

The electrode active material composite particles may further comprise a binder. For example, the electrode active material composite particles may be secondary particles having a plurality of electrode active material particles bonded together via a binder.

The content of the electrode active material particles in the electrode active material composite particles is not particularly restricted and may be set as appropriate in consideration of the desired battery capacity.

The binder is not particularly restricted and may be, for example, a rubber-based binder such as a butadiene rubber (BR)-based binder, butylene rubber (IIR)-based binder, acrylate-butadiene rubber (ABR)-based binder or styrene-butadiene rubber (SBR)-based binder; a polymer-based binder such as a polyvinylidene fluoride (PVDF)-based binder, polytetrafluoroethylene (PTFE)-based binder, polyimide (PI)-based binder, carboxymethyl cellulose (CMC)-based binder, polyacrylic acid salt-based binder or polyacrylic acid ester-based binder; a saccharide-based binder such as fructose, glucose, sucrose or maltose; or a combination of the foregoing.

The content of the binder in the electrode active material composite particles is not particularly restricted and may be set as appropriate in consideration of the desired bondability.

There are no particular restrictions on the method of forming the electrode active material composite particles, and for example, they may be formed by providing a slurry comprising electrode active material particles and a dispersing medium, and removing the dispersing medium by spray drying.

The dispersing medium is not particularly restricted so long as it can disperse the electrode active material particles.

The slurry may also comprise a binder. In this case, the dispersing medium may be one capable of dissolving the binder. In other words, the dispersing medium may be a solvent for the binder.

### <Tetrapod-shaped particles>

The electrode mixture of the disclosure comprises tetrapod-shaped particles. If the electrode mixture comprises tetrapod-shaped particles, it will be possible to inhibit excessive collapse of the electrode active material in the thickness direction caused by pressing after the electrode active material layer has been formed.

The tetrapod-shaped particles in the electrode mixture of the disclosure may be zinc oxide particles. The tetrapod-shaped zinc oxide particles may be a commercial product, for example.

It can be confirmed that the tetrapod-shaped particles in the electrode mixture have tetrapod shapes by 3D-SEM or CT scanning, for example.

The length of one side of each tetrapod-shaped particle is not particularly restricted and may be 1 µm or larger, 3 µm or larger, 5 µm or larger, 10 µm or larger, 15 µm or larger or 20 µm or larger, and 50 µm or smaller, 30 µm or smaller, 20 µm or smaller, 15 µm or smaller or 10 µm or smaller, for example. According to the invention, the "length of one side" for each tetrapod-shaped particle is the average length of the four legs forming the tetrapod-shaped particle.

The tetrapod-shaped particle content is not particularly restricted, and it may be appropriately set in a range that exhibits a pillar function while not interfering with electrode reaction.

### (Relationship with electrode active material particles or their electrode active material composite particles)

In the electrode mixture of the disclosure, the ratio of the length of one side of each tetrapod-shaped particle with respect to the mean particle diameter of the electrode active material particles may be 1 to 50. The ratio may be 1 or greater, 2 or higher, 3 or higher, 4 or higher, 5 or higher or 6 or higher, and 50 or lower, 40 or lower, 30 or lower, 20 or lower, 10 or lower, 8 or lower or 7 or lower.

In the electrode mixture of the disclosure, the ratio of the length of one side of each tetrapod-shaped particle with respect to the mean particle diameter of the electrode active material composite particles may be 0.1 to 10. The ratio may be 0.1 or higher, 0.3 or higher, 0.5 or higher, 1 or greater or 2 or higher, and 10 or lower, 5 or lower, 3 or lower or 2 or lower.

In the electrode mixture of the disclosure, the proportion of the tetrapod-shaped particle content with respect to the electrode active material particle content may be 1.0 vol% to 6.0 vol%. The proportion may be 1.0 vol% or higher or 1.5 vol% or higher, and 6.0 vol% or lower, 5.0 vol% or lower, 4.0 vol% or lower, 3.0 vol% or lower or 2.0 vol% or lower.

### <Filamentous particles>

The electrode mixture of the disclosure may further comprise filamentous particles. The filamentous particles may be ones that can function as conductive aids. For the purpose of the disclosure, "filamentous form" means an aspect ratio of 2.5 or higher.

The present inventors considered that when an electrode mixture comprises filamentous particles without including tetrapod-shaped particles, the filamentous particles tend to become oriented in the in-plane direction, i.e. the filamentous particles tend to be present in an collapsed state. This may impair the uniformity of the constituent components in the thickness direction and the in-plane direction of the electrode active material layer.

In this regard, the present inventors considered that the aforementioned problems can be solved if the electrode mixture containing the filamentous particles further comprises tetrapod-shaped particles. Without being restricted to any particular theory, the reason for this is conjectured to be as follows. Specifically, if the electrode mixture 1 comprises tetrapod-shaped particles 20, as shown in Fig. 2, then orientation of the filamentous particles 30 in the in-plane direction can be inhibited, allowing the filamentous particles 30 to be oriented in the thickness direction, i.e. allowing the filamentous particles 30 to be disposed in a vertical manner. This can improve the uniformity of the constituent components in the thickness direction and the in-plane direction of the electrode active material layer.

If the filamentous particles are oriented in the thickness direction as well, conductivity can be improved and electrode reaction will tend to take place more uniformly. Moreover, having the filamentous particles oriented in the thickness direction improves the strength of the electrode mixture serving as the electrode active material layer.

The filamentous particles are not particularly restricted and may be a filamentous carbon substance, a filamentous metal either alone or as a metal compound, or a combination thereof.

Examples of filamentous carbon substances include carbon nanotubes (CNT), vapor-grown carbon fibers (VGCF), carbon nanofibers (CNF) and carbon micro fibers (CMF). Examples of carbon nanotubes include single-walled carbon nanotubes (SWCNT) and multi-walled carbon nanotubes (MWCNT).

Examples of metals used to form fibrous metals include nickel, aluminum, copper, iron, stainless steel and titanium.

The filamentous particles are most preferably vapor-grown carbon fibers (VGCF).

The fiber diameters of the filamentous particles are not particularly restricted and may be 0.1 nm or larger, 0.3 nm or larger, 0.5 nm or larger, 1 nm or larger, 5 nm or larger, 10 nm or larger, 50 nm or larger, 80 nm or larger, 100 nm or larger, 120 nm or larger, 140 nm or larger or 150 nm or larger, and 1000 nm or smaller, 750 nm or smaller, 500 nm or smaller, 300 nm or smaller, 200 nm or smaller or 150 nm or smaller, for example.

The fiber lengths of the filamentous particles may be 0.1 µm or greater, 0.5 µm or greater, 1 µm or greater, 2 µm or greater, 3 µm or greater, 4 µm or greater or 5 µm or greater, and 100 µm or smaller, 70 µm or smaller, 50 µm or smaller, 30 µm or smaller, 20 µm or smaller, 10 µm or smaller or 5 µm or smaller, for example.

The aspect ratio of the filamentous particles is not particularly restricted and may be 2.5 or higher, 5 or higher, 10 or higher, 15 or higher, 20 or higher, 25 or higher, 30 or higher, 50 or higher, 100 or higher, 150 or higher, 200 or higher, 250 or higher, 500 or higher, 1000 or higher, 2500 or higher or 5000 or higher, and 10,000 or lower, 7500 or lower, 5000 or lower, 2500 or lower, 1000 or lower, 750 or lower, 500 or lower, 250 or lower, 100 or lower, 75 or lower, 50 or lower, 40 or lower or 35 or lower, for example.

The content of the filamentous particles is not particularly restricted and may be set as appropriate in consideration of the desired conductivity, for example.

### (Relationship with tetrapod-shaped particles)

In the electrode mixture of the disclosure, the ratio of the length of one side of each tetrapod-shaped particle with respect to the fiber length of the filamentous particles may be 0.5 to 20. The ratio may be 0.5 or higher, 1 or higher, 2 or higher, 3 or higher or 4 or higher, and 20 or lower, 10 or lower, 8 or lower, 5 or lower or 4 or lower.

### <Solid electrolyte>

The electrode mixture of the disclosure may further comprise a solid electrolyte. The solid electrolyte is not particularly restricted, and examples include inorganic solid electrolytes such as sulfide solid electrolytes, oxide solid electrolytes, nitride solid electrolytes and halide solid electrolytes, and organic polymer electrolytes such as polymer electrolytes. The solid electrolyte may be a sulfide solid electrolyte, in particular.

When the electrode mixture of the disclosure is an electrode mixture for a lithium ion secondary battery, a sulfide solid electrolyte with lithium ion conductivity may be, for example, a solid electrolyte comprising Li element, an element X (where X is at least one selected from among P, As, Sb, Si, Ge, Sn, B, Al, Ga and In), and S element. The sulfide solid electrolyte may further comprise either or both O element and a halogen element. The halogen element may be F element, Cl element, Br element or I element, for example.

Examples of sulfide solid electrolytes include Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃ and Li₂S-P₂S₅-ZmSn (where m and n are positive integers and Z is Ge, Zn or Ga), or Li₂S-GeS₂, Li₂S-SiS₂-Li₃PO₄ or Li₂S-SiS₂-LiₓMO_{y} (where x and y are positive integers and M is P, Si, Ge, B, Al, Ga, In).

The solid electrolyte content is not particularly restricted, and it may be appropriately set in consideration of the desired ionic conductivity.

### <Other components>

The electrode mixture may further comprise components other than those mentioned above. Such components are not particularly restricted and may be conductive aids or binders, for example.

A conductive aid may be the same as or different from the fibrous carbon mentioned above. The conductive aid may be, for example, a carbon material or metal particles, or a combination thereof. Carbon materials include, for example, non-fibrous carbon materials such as acetylene black (AB) and Ketjen black (KB); and vapor-grown carbon fibers (VGCF), carbon nanotubes (CNT) and carbon nanofibers (CNF), as well as fibrous carbon materials, or combinations of the foregoing. Metal particles may be, for example, nickel, copper, iron or stainless steel, or a combination thereof.

The binder may be the same as or different from the binder used to form the electrode active material composite particles. Examples of binders include rubber-based binders such as butadiene rubber, butadiene hydride rubber, styrene-butadiene rubber (SBR), hydrogenated styrene-butadiene rubber, nitrile-butadiene rubber, hydrogenated nitrile-butadiene rubber, acrylate-butadiene rubber (ABR) and ethylene-propylene rubber; fluoride-based binders such as polyvinylidene fluoride (PVDF), vinylidene-polyhexafluoropropylene polyfluoride copolymer (PVDF-HFP), polytetrafluoroethylene and fluorine rubber; polyolefin-based thermoplastic resins such as polyethylene, polypropylene and polystyrene; imide-based resins such as polyimide and polyamideimide; amide-based resins such as polyamide; acrylic-based resins such as polymethyl acrylate and polyethyl acrylate; methacrylic resins such as polymethyl methacrylate and polyethyl methacrylate; and combinations of the foregoing.

The contents of the other components in the electrode mixture are not particularly restricted.

### <Battery>

The battery of the disclosure has an electrode active material layer, the electrode active material layer comprising an electrode mixture of the disclosure. The battery of the disclosure may have a negative electrode collector layer, a negative electrode active material layer, an electrolyte layer, a positive electrode active material layer and a positive electrode collector layer, in that order. In this case, the electrode active material layer comprising the electrode mixture of the disclosure may be a negative electrode active material layer or a positive electrode active material layer, and especially a negative electrode active material layer.

The battery of the disclosure may be a liquid battery or a solid-state battery, and especially a solid-state battery. The term "solid-state battery" as used herein refers to a battery using at least a solid electrolyte as the electrolyte, and the solid-state battery may also employ a combination of a solid electrolyte and a liquid electrolyte as the electrolyte. Alternatively, the solid-state battery may be an all-solid-state battery, i.e. a battery employing only a solid electrolyte as the electrolyte.

The battery of the disclosure may be a primary battery or a secondary battery, and especially a lithium ion secondary battery.

The battery of the disclosure may be constrained by a constraining member such as an end plate, from both sides in the stacking direction of each layer. The constraining method may be, but is not limited to, a method utilizing the constraining torque of a bolt.

The elements composing the battery of the disclosure will now be described. A case where the electrode active material layer comprising the electrode mixture of the disclosure is a negative electrode active material layer will now be described as an example.

### <Negative electrode collector layer>

The negative electrode collector layer may be used in the form of a foil, sheet, mesh, punching metal or foam. The negative electrode collector layer may be a metal foil or metal mesh, or it may be a carbon sheet, but is especially a metal foil. The negative electrode collector layer may also comprise a plurality of foils or sheets.

The metal composing the negative electrode collector layer is not particularly restricted and may be copper, nickel, chromium, gold, platinum, silver, aluminum, iron, titanium, zinc, cobalt or stainless steel, for example. In particular, the negative electrode collector layer may comprise one or more metals selected from among copper, nickel and stainless steel.

In order to adjust the resistance, a coating layer may be formed on the surface of the negative electrode collector layer. The negative electrode collector layer may also have a metal that has been plated or vapor deposited on a metal foil or substrate. When the negative electrode collector layer is made of a plurality of metal foils, it may also have a different layer between the plurality of metal foils.

The thickness of the negative electrode collector layer is not particularly restricted, and may be 0.1 µm or larger or 1 µm or larger, and 1 mm or smaller or 100 µm or smaller, for example.

### <Negative electrode active material layer>

The negative electrode active material layer comprises an electrode mixture of the disclosure. The electrode mixture of the disclosure will be understood by referring to the aforementioned description of the electrode mixture of the disclosure. The negative electrode active material layer may also be one having the electrode mixture of the disclosure itself molded into a layered form.

The thickness of the negative electrode active material layer is not particularly restricted and may be 0.1 µm to 1000 µm, for example.

### <Solid electrolyte layer>

The solid electrolyte layer comprises at least a solid electrolyte, and may also optionally include a binder or other component.

The solid electrolyte and binder may be understood by referring to the aforementioned description regarding the electrode mixture of the disclosure.

The thickness of the solid electrolyte layer is not particularly restricted and may be 0.1 µm to 1000 µm, for example.

### <Positive electrode active material layer>

The positive electrode active material layer is a layer that comprises at least a positive electrode active material, and it may also optionally comprise a solid electrolyte, a conductive aid and a binder.

The positive electrode active material is not particularly restricted and may be an oxide active material, for example. When the battery of the disclosure is a lithium ion secondary battery, the oxide active material may be LiCoO2, LiMnO2, Li₂NiMn₃O₈, LiVO2, LiCrO₂, LiFePO₄, LiCoPO4, LiNiO2 or LiNi_{1/3}Co_{1/3}Mn_{1/3}O₂, for example. A coating layer comprising a Li ion conductive oxide such as LiNbO₃, for example, may also be formed on the surface of the active material.

The content of the positive electrode active material in the positive electrode active material layer is not particularly restricted.

The solid electrolyte, conductive aid and binder may be understood by referring to the aforementioned description regarding the electrode mixture of the disclosure.

The thickness of the positive electrode active material layer is not particularly restricted and may be 0.1 µm to 1000 µm, for example.

### <Positive electrode collector layer>

The positive electrode collector layer may be used in the form of a foil, sheet, mesh, punching metal or foam. The positive electrode collector layer may be a metal foil or metal mesh, and is especially a metal foil. The positive electrode collector layer may also comprise a plurality of foils.

The metal composing the positive electrode collector layer may be copper, nickel, chromium, gold, platinum, silver, aluminum, iron, titanium, zinc, cobalt or stainless steel, and in particular the positive electrode collector layer may contain aluminum.

In order to adjust the resistance, a coating layer may be formed on the surface of the positive electrode collector layer. The positive electrode collector layer may also have a metal that has been plated or vapor deposited on a metal foil or substrate. When the positive electrode collector layer is made of a plurality of metal foils, it may also have different layers between the plurality of metal foils.

The thickness of the positive electrode collector layer is not particularly restricted, and may be 0.1 µm or larger or 1 µm or larger, and 1 mm or smaller or 100 µm or smaller, for example.

### <Remaining construction>

The battery may have any of the constructions described above housed inside an exterior body. The exterior body used may be any publicly known type which is used as an exterior body for batteries. A plurality of batteries may also be optionally electrically connected and optionally stacked to form a battery assembly. In this case the assembled batteries may be housed inside a publicly known battery case. The battery may have an obvious type of construction, with the necessary terminals, for example. The form of the battery may be, for example, a coin, laminated (pouch), cylindrical or rectilinear form.

### <Method for producing battery>

The method for producing a battery of the disclosure is not particularly restricted, and for example, it includes forming an electrode active material layer comprising an electrode mixture of the disclosure.

The method of forming the electrode active material layer comprising the electrode mixture may be one in which a constituent material such as electrode active material particles is mixed to obtain an electrode mixture, and the obtained electrode mixture is subjected to dry molding or wet molding.

When the battery is a solid-state battery, in particular, the electrode active material layer may be press molded for densification. Since the electrode active material layer comprises tetrapod-shaped particles, voids formed inside the electrode active material composite particles are maintained even under such pressing.

The method for producing a battery of the disclosure may further include stacking the negative electrode collector layer, negative electrode active material layer, solid electrolyte layer, positive electrode active material layer and positive electrode collector layer in that order to form an electrode stack.

Terminals and other members may also be attached to the electrode stack as necessary. The electrode stack is housed and sealed in a battery case to obtain a battery.

### [Examples]

### <Example 1>

### <Preparation of nanoporous silicon particles>

A 0.65 g portion of Si particles (particle size: 0.5 µm, product of Kojundo Chemical Laboratory Co., Ltd.) and 0.60 g of Li metal (product of Honjo Metal Co., Ltd.) were mixed with an agate mortar under an Ar atmosphere, to obtain a LiSi precursor. In a glass reactor under an Ar atmosphere, 1.0 g of LiSi precursor and 125 ml of a dispersing medium (1,3,5-trimethylbenzene, product of Nacalai Tesque, Inc.) were mixed using an ultrasonic homogenizer (UH-50, product of SMT). After mixing, the obtained LiSi precursor dispersion was cooled to 0°C, 125 ml of ethanol (product of Nacalai Tesque, Inc.) was added dropwise as a Li extraction solvent, and reaction was conducted for 120 minutes. After the reaction, 50 ml of acetic acid (product of Nacalai Tesque, Inc.) was further added dropwise for reaction for 60 minutes. After this reaction, the liquid and solid reaction products were separated by suction filtration. The obtained solid reaction product was vacuum dried for 2 hours at 120°C to obtain nanoporous Si containing multiple pores with diameters of 55 nm and smaller.

### <Formation of negative electrode active material layer>

To 3 g of tetralin as the solvent there were added 0.5 g of prepared Si particles (mean particle diameter: 1 µm) as electrode active material particles (negative electrode active material particles), 30 mg of zinc oxide particles (side length: 10 µm) as tetrapod-shaped particles, 0.8 g of a sulfide solid electrolyte and 0.3 g of a 5 wt% tetralin solution of styrene-butadiene rubber (SBR) as a binder, and the mixture was dispersed for 10 minutes with ultrasonic waves having an amplitude of 40 µm and a frequency of 20 kHz to obtain a negative electrode mixture slurry. The obtained slurry was blade coated with a 300 µm gap onto a roughened nickel (Ni) foil as a negative electrode collector layer. This produced a negative electrode active material layer comprising an electrode mixture of the disclosure molded into a laminar shape.

<Formation of solid electrolyte layer>

To 0.8 g of heptane as the solvent there were added 0.4 g of a sulfide solid electrolyte and 0.05 g of a 5 wt% heptane solution of acrylate-butadiene rubber (ABR) as a binder, and the mixture was dispersed for 10 minutes with ultrasonic waves to obtain a solid electrolyte composite slurry. The obtained slurry was coated with a 50 µm gap onto a stainless steel foil as the release sheet. A solid electrolyte layer was thus obtained. Two solid electrolyte layers were formed.

### <Formation of positive electrode active material layer>

To 1 g of butyl butyrate as the solvent there were added 2 g of lithium nickel-cobalt-manganate (NCM) as a positive electrode active material, 0.03 g of VGCF-H as a conductive aid, 0.3 g of a sulfide solid electrolyte and 0.3 g of a 5 wt% butyl butyrate solution of PVDF-HFP as a binder, and the mixture was dispersed for 10 minutes with ultrasonic waves to obtain a positive electrode mixture slurry. The obtained slurry was blade coated with a 200 µm gap onto aluminum foil as a positive electrode collector layer. A positive electrode active material layer was thus obtained.

### <Fabrication of battery>

A first solid electrolyte layer was stacked onto the negative electrode active material layer and roll pressed at room temperature and a linear pressure of 3 t/cm. A second solid electrolyte layer was stacked onto the positive electrode active material layer and roll pressed at 170°C and a linear pressure of 4 t/cm. Each was punched out to 1 cm², and the solid electrolyte layers from which the stainless steel foil had been released were layered together and joined. A battery was thus obtained for Example 1.

### <Evaluation>

The battery was constrained with 5 MPa, and a charge-discharge test was conducted while recording the numerical value for the load cell. The value of the constraining pressure (MPa) when the negative electrode active material was charged at 1000 mAh divided by the initial charge capacity (mAh) of the cell (MPa/mAh) was compared. The value used was for the fluctuation in constraining pressure when constant current-constant voltage (CCCV) charge was carried out up to 4.35 V at a rate of 1/10 C and followed by CCCV discharge to 3.35 V at 1/3 C, and subsequent further CCCV charge.

### <Example 2>

A battery for Example 2 was obtained and evaluated in the same manner as Example 1, except that the zinc oxide particles used as tetrapod-shaped particles were changed to those listed in Table 1. For convenience, Table 1 lists the tetrapod-shaped particles and their substitute compounds as "Filler".

### <Comparative Example 1>

A battery for Comparative Example 1 was obtained and evaluated in the same manner as Example 1, except that tetrapod-shaped particles were not used.

### <Comparative Example 2>

A battery for Comparative Example 2 was obtained and evaluated in the same manner as Example 1, except that alumina particles were used as a substitute compound for tetrapod-shaped particles.

Table 1 shows the evaluation results for fluctuation in constraining pressure for the batteries of Examples 1 and 2 and Comparative Examples 1 and 2.

### [Table 1]

**Table 1**

| | Electrode active material | Filler | Constraining pressure fluctuation [MPa/mAh] |
|---|---|---|---|
| Example 1 | Si particles (particle diameter: 1 µm) | Tetrapod-shaped ZnO particles (side length: 10 µm) | 0.310 |
| Example 2 | Si particles (particle diameter: 1 µm) | Tetrapod-shaped ZnO particles (side length: 20 µm) | 0.320 |
| Comp. Example 1 | Si particles (particle diameter: 1 µm) | - | 0.350 |
| Comp. Example 2 | Si particles (particle diameter: 1 µm) | Alumina particles (particle diameter: 10 µm) | 0.370 |

As shown in Table 1, the batteries of the Examples which comprised tetrapod-shaped particles in the electrode mixture exhibited low fluctuation in constraining pressure.

### <Example 3>

### <Fabrication of electrode active material composite particles>

The nanoporous Si (primary particles) and a PVDF-HFP binder (product of Kureha Corp.) were dispersed and partially dissolved in dimethyl carbonate (product of Nacalai Tesque, Inc.) to a nanoporous Si:binder ratio of 100:13.3 (mass ratio), to obtain a slurry. The slurry was sprayed in a spray drier with a nitrogen gas atmosphere at 140°C and dried to obtain electrode active material composite particles comprising nanoporous Si and a binder.

A battery for Example 3 was obtained and evaluated in the same manner as Example 1, except that the obtained electrode active material composite particles were used as the electrode active material.

### <Example 4 and Comparative Examples 3 and 4>

Batteries for Example 4 and Comparative Examples 3 and 4 were obtained and evaluated in the same manner as Example 2 and Comparative Examples 1 and 2, respectively, except that the electrode active material composite particles obtained in Example 3 were used as the electrode active material.

Table 1 shows the evaluation results for fluctuation in constraining pressure for the batteries of Examples 3 and 4 and Comparative Examples 3 and 4.

### [Table 2]

**Table 2**

| | Electrode active material | Filler | Constraining pressure fluctuation [MPa/mAh] |
|---|---|---|---|
| Example 3 | Electrode active material composite particles (particle diameter: 10 µm) | Tetrapod-shaped ZnO particles (side length: 10 µm) | 0.282 |
| Example 4 | Electrode active material composite particles (particle diameter: 10 µm) | Tetrapod-shaped ZnO particles (side length: 20 µm) | 0.260 |
| Comp. Example 3 | Electrode active material composite particles (particle diameter: 10 µm) | - | 0.289 |
| Comp. Example 4 | Electrode active material composite particles (particle diameter: 10 µm) | Alumina particles (particle diameter: 10 µm) | 0.295 |

As shown in Table 2, the batteries of the Examples which comprised tetrapod-shaped particles in the electrode mixture exhibited low fluctuation in constraining pressure. Moreover, with the batteries of Examples 3 and 4, the fluctuation in constraining pressure was lower than with the batteries of Examples 1 and 2. This is believed to be because the tetrapod-shaped particles in the electrode mixture functioned as pillars, making the voids in the electrode active material composite particles unlikely to collapse even with pressing during battery fabrication.

### <Examples 5 and 6>

Batteries for Examples 5 and 6 were obtained and evaluated in the same manner as Example 4, except that the volume ratio (ZnO/Si) of the content of zinc oxide particles as tetrapod-shaped particles with respect to the content of electrode active material composite particles was changed as shown in Table 3. The results are shown in Table 3. Table 3 also shows Example 4 for reference.

### [Table 3]

**Table 3**

| | Electrode active material | Filler | ZnO/Si [vol%] | Constraining pressure fluctuation [MPa/mAh] |
|---|---|---|---|---|
| Example 5 | Electrode active material composite particles (particle diameter: 10 µm) | Tetrapod-shaped ZnO particles (side length: 20 µm) | 1.9 | 0.226 |
| Example 4 | Electrode active material composite particles (particle diameter: 10 µm) | Tetrapod-shaped ZnO particles (side length: 20 µm) | 3.7 | 0.260 |
| Example 6 | Electrode active material composite particles (particle diameter: 10 µm) | Tetrapod-shaped ZnO particles (side length: 20 µm) | 5.6 | 0.275 |

As shown in Table 3, the fluctuation in constraining pressure was low for all of the batteries for which the volume ratio (ZnO/Si) was examined, the lowest fluctuation in constraining pressure being exhibited by the battery of Example 5.

### <Example 7>

A battery for Example 7 was obtained and evaluated in the same manner as Example 4, except that VGCF (fiber length: 5 µm) was further added as filamentous particles during preparation of the negative electrode mixture slurry. The results are shown in Table 4. Table 4 also shows Example 4 for reference.

### <Comparative Example 5>

A battery for Comparative Example 5 was obtained and evaluated in the same manner as Comparative Example 3, except that VGCF (fiber length: 5 µm) was further added as filamentous particles during preparation of the negative electrode mixture slurry. The results are shown in Table 4. Table 4 also shows Comparative Example 3 for reference.

### <Strength of negative electrode active material layer>

The stack of the negative electrode active material layer and negative electrode collector layer before densification was punched at φ11.28 mm, and the negative electrode collector layer side was attached to a pedestal using double-sided tape. Double-sided tape was also attached to the negative electrode active material layer side, and the tip of the tensile tester was pushed against the bonding surface of the double-sided tape on the opposite side from the negative electrode active material layer side, and pressed in at 50 N for close bonding of the double-sided tape. A tensile test was then conducted, and the maximum load was recorded as the peel strength. The peel strength referred to here is the strength of the negative electrode active material layer against cohesive fracture, and is therefore not the strength against peeling between the negative electrode active material layer and the negative electrode collector layer. A high level of this peel strength suggests that VGCF is oriented in the thickness direction as well.

### [Table 4]

**Table 4**

| | Electrode active material | Filler | Filamentous particles | Strength [N/cm²] | Constraining pressure fluctuation [MPa/mAh] |
|---|---|---|---|---|---|
| Example 7 | Electrode active material composite particles (particle diameter: 10 µm) | Tetrapod-shaped ZnO particles (side length: 20 µm) | VGCF (Fiber length: 5 µm) | 8.5 | 0.242 |
| Example 4 | Electrode active material composite particles (particle diameter: 10 µm) | Tetrapod-shaped ZnO particles (side length: 20 µm) | - | 6.5 | 0.260 |
| Comp. Example 5 | Electrode active material composite particles (particle diameter: 10 µm) | - | VGCF (Fiber length: 5 µm) | 3.8 | 0.292 |
| Comp. Example 3 | Electrode active material composite particles (particle diameter: 10 µm) | - | - | 4.1 | 0.289 |

As shown in Table 4, the fluctuation in constraining pressure was lowest with the battery of Example 7 which contained zinc oxide particles as tetrapod-shaped particles and VGCF as filamentous particles in the electrode mixture. This is believed to be because VGCF is also oriented in the thickness direction by the tetrapod-shaped particles in the electrode mixture, whereby the function of the VGCF as a conductive aid was improved, thus tending to result in uniform electrode reaction while also improving the strength of the electrode mixture as the electrode active material layer.

### REFERENCE SIGNS LIST

1 Electrode mixture (electrode active material layer)
10 Electrode active material particles (electrode active material composite particles)
20 Tetrapod-shaped particles
30 Filamentous particles

## Claims

1. An electrode mixture comprising:
electrode active material particles, and
tetrapod-shaped particles.

2. The electrode mixture according to claim 1, wherein the ratio of the length of one side of the tetrapod-shaped particles with respect to the mean particle diameter of the electrode active material particles is 1 to 50.

3. The electrode mixture according to claim 1, wherein the electrode active material particles form electrode active material composite particles.

4. The electrode mixture according to claim 3, wherein the ratio of the length of one side of the tetrapod-shaped particles with respect to the mean particle diameter of the electrode active material composite particles is 0.1 to 10.

5. The electrode mixture according to claim 1, which further comprises filamentous particles.

6. The electrode mixture according to claim 5, wherein the filamentous particles are vapor-grown carbon fibers.

7. The electrode mixture according to claim 5, wherein the ratio of the length of one side of the tetrapod-shaped particles with respect to the fiber length of the filamentous particles is 0.5 to 20.

8. The electrode mixture according to claim 1, wherein the electrode active material particles are alloy-based electrode active material particles.

9. The electrode mixture according to claim 8, wherein the alloy-based electrode active material particles are silicon particles.

10. The electrode mixture according to claim 1, wherein the tetrapod-shaped particles are zinc oxide particles.

11. The electrode mixture according to claim 1, wherein the ratio of the tetrapod-shaped particle content with respect to the electrode active material particle content is 1.0 vol% to 6.0 vol%.

12. The electrode mixture according to claim 1, which further comprises a solid electrolyte.

13. An electrode mixture according to claim 12, wherein the solid electrolyte is a sulfide solid electrolyte.

14. A battery,
having an electrode active material layer,
wherein the electrode active material layer comprises an electrode mixture according to any one of claims 1 to 13.

15. The battery according to claim 14, which is a solid-state battery.
